## Europäisches Patentamt
## European Patent Office
## Office européen des brevets

(11) Publication number: **0 209 175**
**B1**

# EUROPEAN PATENT SPECIFICATION

(45) Date of publication of the patent specification:
**22.03.89**

(51) Int. Cl.⁴: **B 60 R 22/24**

(21) Application number: **86201110.3**

(22) Date of filing: **25.06.86**

(54) **Three-point safety belt assembly for a vehicle.**

(30) Priority: **08.07.85 NL 8501943**

(43) Date of publication of application:
**21.01.87 Bulletin 87/4**

(45) Publication of the grant of the patent:
**22.03.89 Bulletin 89/12**

(84) Designated Contracting States:
**DE FR GB IT NL SE**

(56) References cited:
**DE-A- 2 541 647**
**DE-A- 2 724 894**
**US-A- 4 118 068**

(73) Proprietor: **Volvo Car B.V., Steenovenweg 1, NL-5708 HN Helmond (NL)**

(72) Inventor: **van der Wiel, Johannes Willem, Angoulemehof 19, NL-5627 LH Eindhoven (NL)**

(74) Representative: **Timmermans, Anthonius C.Th., Ir. et al, European Patent Attorneys Octrooibureau Zuid P.O. Box 2287, NL-5600 CG Eindhoven (NL)**

ACTORUM AG

## Description

Three-point safety belt assembly for a vehicle, in which both belt ends have been attached to a first point at or near a doorpost of the vehicle and where an automatic belt coiling device may be located for one of the belt ends, where a rotatable arm is provided at a second point with a belt guiding means, in which second point is also located a first sliding eye for the belt, whereby a second sliding eye with attachment means is present which is slidable along the belt and can be attached to a third point located at the side opposite the doorpost of a seat located there, whereby the arm has an attachment point for attaching one end of a helical spring, while the other end of the spring is fixed to a part of the vehicle body, the attachment point being located offset of the pivot point of the arm and being located such that the imaginary pivot axis at the pivot point of the arm intersects the plane stretched between the central axis of the spring in a vertical position of the arm and the central axis of the spring in a horizontal position of the arm, and being located such that the tangential component of the tension force of the spring in the horizontal position of the arm is directed oppositely the tangential component in the vertical position of the arm. Such a safety belt is known from DE-A-2 724 894. Here the rotatable arm is fixed at the floor of the vehicle and can be of a type as depicted in Fig. 8 or 9.

A three-point safety belt assembly provided with a swinging arm is known from German Auslegeschrift 2 360 702.

It is applied in particular in two door motor cars, because there normally exists the drawback that the driver or the passenger next to the driver has to reach far behind to get to the belt. The fact is that the door of a two door car is normally relatively wide so that the doorpost to the upper part of which the three-point belt is attached is located relatively far to the back with regard to the relative person. For this reason this point of the belt is not attached directly to this post by way of a sliding eye but by intermediary of a swinging arm as German Auslegeschrift 2 360 702 shows. This is also shown in German Auslegeschrift 2 541 647. Moreover the sliding eye of the safety belt is attached to the arm so as to be rotatable about the longitudinal axis of the arm, so that the belt in use can adapt its position to the relative person.

The known swinging arms have the drawback that they have no well defined positions. By this is meant that they can remain in any position. This can be objectionable also if a back seat passenger gets into the car, whereas a fixed (more or less horizontal) position during use provides more certainty as to an effective safety.

The object of the invention is to meet these objections so that the swinging arm can easily be brought into two extreme positions and kept therein. If a driver (or the passenger next to him) gets in he can have the arm swing forward to a substantially horizontal position upon a light touch, which causes at the same time the safety belt with its sliding eye to move forward.

In accordance with the invention this is brought about if the second point is located higher at the doorpost than the first point, that the second point is located when in use about at shoulder level of a person seated there, whereby the rotatable arm is attached to the doorpost while being rotatable between the vertical position and the horizontal position, that the belt guiding means are rotatable about the longitudinal axes of the arm, that the first sliding eye for the belt is rotatably located in the second point, and that the tangential component in the horizontal position of the arm is larger than the tangential component in the vertical position of the arm.

The two extreme positions of the arm should be limited preferably by the provision of stops.

The first point of attachment mentioned of the end of the helical spring may be a part of the arm for example in the form of an eye but may also be located in or on a plate attached to the arm, which plate is also rotatable about the pivot point.

It has been found that it is desirable for an efficient and easy functioning of the assembly of rotatable arm and belt that this guiding means functions very smoothly. For that purpose and in accordance with the invention the free end of the arm is provided with a fork rotatable about the longitudinal axis of the arm and a guide roller for the belt is mounted therein and is rotatable about its longitudinal axis.

The arm preferably has a bent form and is thereby adapted to local circumstances for optimal guidance of the belt. The asymmetric form with regard to the centerline of the arm guaranties a good guiding and passage of the safety belt.

The invention is further explained with a drawing. This shows in:

Fig. 1 a view of a swinging arm according to the invention in its extreme positions; and

Fig. 2 is a section of the same swinging arm.

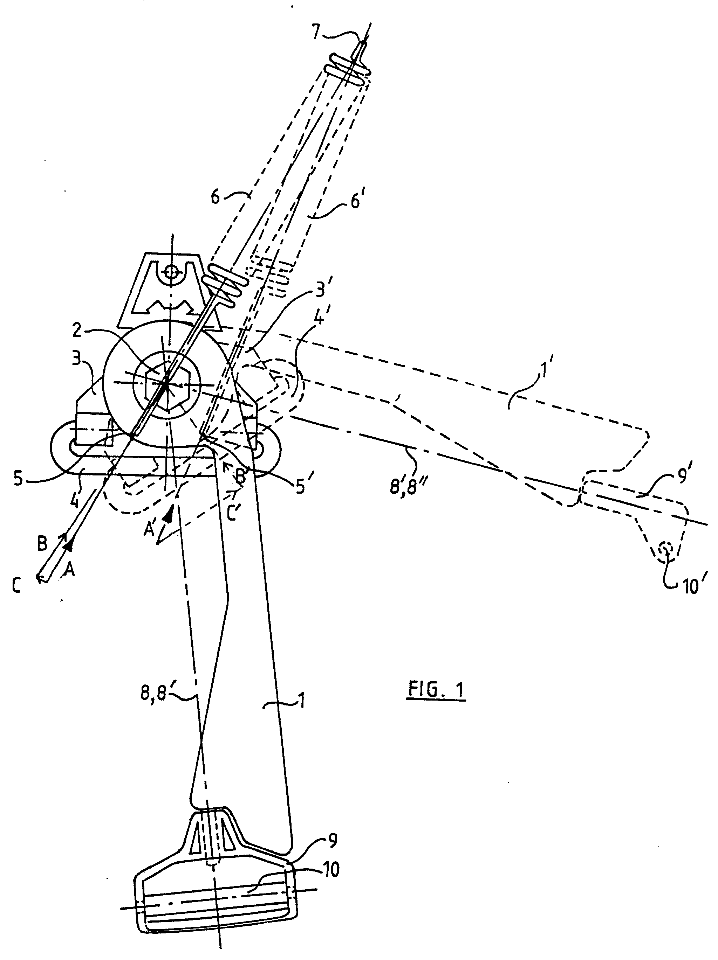

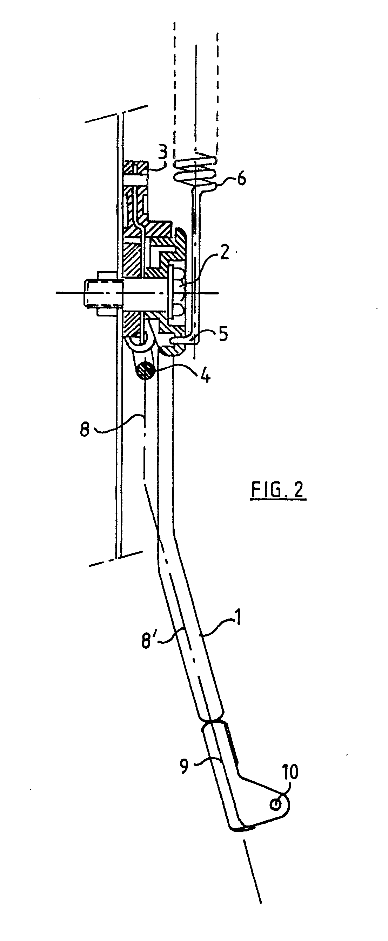

Fig. 1 and Fig. 2 show that the swinging arm 1 is rotatably connected to the attachment bolt 2. Rotatable about the bolt 2 are also a plate 3 and the sliding eye 4 for the safety belt (not indicated) movably attached to the plate.

The arm 1 has an attachment point 5, respectively 5' for the end of a helical spring 6, respectively 6'. This spring 6 has been fixedly connected at a point 7 to a point of the car body.

Fig. 1 shows that the force A of the spring 6 can be resolved into a force B through the point of rotation of the arm 1 with centerline 8, 8' and a force C acting perpendicular to force B. This force forces the arm 1 into an extreme position (drawn with unbroken lines).

The same can be represented for the position 1' of the arm. The spring is located in position 6' with point of attachment 5'. A similar diagram of forces can be drawn, which shows that a force C' which is larger than force C again acts in a tangentional direction but now into the direction of the other extreme position.

In a direct line with the centerline 8 mentioned and immovable in the direction of this axis is rotatably fixed a guiding piece 9, 10 with fork shaped part 9 between which is attached a rotatable guiding roller 10 for the purpose described above.

## Claims

1. Three-point safety belt assembly for a vehicle, in which both belt ends have been attached to a first point at or near a doorpost of the vehicle and where an automatic belt coiling device may be located for one of the belt ends, where a rotatable arm (1) is provided at a second point with a belt guiding means (9, 10), in which second point is also located a first sliding eye (4) for the belt, whereby a second sliding eye with attachment means is present which is slidable along the belt and can be attached to a third point located at the side opposite the doorpost of a seat located there, whereby the arm (1) has an attachment point (5) for attaching one end of a helical spring (6), while the other end (7) of the spring (6) is fixed to a part of the vehicle body, the attachment point (5) being located offset of the pivot point (2) of the arm (1) and being located such that the imaginary pivot axis at the pivot point (2) of the arm (1) intersects the plane stretched between the central axis (A) of the spring (6) in a vertical position of the arm (1) and the central axis (A') of the spring (6') in a horizontal position of the arm (1), and being located such that the tangential component (C') of the tension force of the spring (6') in the horizontal position of the arm (1) is directed oppositely the tangential component (C) in the vertical position of the arm (1), characterized in that the second point is located higher at the doorpost than the first point, that the second point is located when in use about at shoulder level of a person seated there, whereby the rotatable arm (1) is attached to the doorpost while being rotatable between the vertical position and the horizontal position, that the belt guiding means (9, 10) are rotatable about the longitudinal axes of the arm (1), that the first sliding eye (4) for the belt is rotatably located in the second point, and that the tangential component (C') in the horizontal position of the arm (1) is larger than the tangential component (C) in the vertical position of the arm (1).

2. Three-point safety belt assembly according to claim 1, characterized in that both positions of the arm (1) are limited by stops.

3. Three-point safety belt assembly according to claim 1 or 2, characterized in that the helical spring (6) has been attached to the arm (1) via a plate which is rotatable about the pivot point (2).

4. Three-point safety belt assembly according to any one of the preceding claims, characterized in that the free end of the arm (1) is provided with a fork (9) rotatable about the longitudinal axis (8) of the arm (1) and a guide roller (10) for the belt is mounted therein and is rotatable about its longitudinal axis.

5. Three-point safety belt assembly according to any of the preceding claims, characterized in that the arm (1) has been bent inwardly over at least a part of its longitudinal axis (8', 8'').

## Patentansprüche

1. Dreipunktsicherheitsgurtkonstruktion für ein Fahrzeug, wobei beide Gurtenden an einem ersten Punkt an oder nahe einer Türsäule des Fahrzeugs befestigt sind und wobei eine Roll-Automatik für den Gurt für eines der beiden Gurtenden angebracht sein kann und wobei ein drehbarer Arm (1) an einem zweiten Punkt mit einem Gurtführungsmittel (9, 10) angebracht ist, an welchem zweiten Punkt sich auch eine erste Gleitöse (4) für den Gurt befindet und eine zweite Gleitöse mit Befestigungsmitteln anwesend ist, die über den Gurt verschiebbar ist und an einem dritten Punkt befestigt werden kann, der an der der Türsäule eines dort angeordneten Sitzes gegenübergelegenen Seite angebracht ist, und wobei der Arm (1) einen Befestigungspunkt (5) für die Befestigung eines Endes einer Schraubfeder (6) hat, während das andere Ende (7) der Feder (6) fest an einem Teil der Karosserie des Fahrzeugs befestigt ist, welcher Befestigungspunkt (5) nicht mit dem Drehpunkt (2) des Arms (1) zusammenfällt und so angeordnet ist, daß die imaginäre Drehachse des Drehpunkts (2) des Arms (1) die Ebene zwischen der zentralen Achse (A) der Feder (6) bei der senkrechten Position des Arms (1) und der zentralen Achse (A') der Feder (6') bei waagerechter Position des Arms (1) durchschneidet und so gelegen ist, dass die Tangentialkomponente (C') der Spannkraft der Feder (6') bei waagerechter Position des Arms (1) der Tangentialkomponente (C) bei senkrechter Position des Arms (1) entgegengerichtet ist, dadurch gekennzeichnet, daß der zweite Punkt höher auf der Türsäule gelegen ist als der erste Punkt, daß der zweite Punkt bei Benutzung etwa in Schulterhöhe einer dort sitzenden Person gelegen ist, und wobei der drehbare Arm (1) an der Türsäule befestigt ist und zwischen der senkrechten Position und der waagerechten Position drehbar ist und wobei die Gurtführungsmittel (9, 10) um die Längsachsen des Arms (1) drehbar sind, und die erste Gleitöse (4) für den Gurt drehbar in dem zweiten Punkt befestigt ist und daß die Tangentialkomponente (C') bei waagerechter Position des Arms (1) größer ist als die Tangentialkomponente (C) bei senkrechter Position des Arms (1).

2. Dreipunktsicherheitsgurtkonstruktion nach Anspruch 1, dadurch gekennzeichnet, daß die beiden Positionen des Arms (1) von Anschlägen begrenzt sind.

3. Dreipunktsicherheitsgurtkonstruktion nach Anspruch 1 oder 2, dadurch gekennzeichnet, daß die Schraubfeder (6) an dem Arm (1) mittels einer Platte befestigt ist, die um den Drehpunkt (2) drehbar ist.

4. Dreipunktsicherheitsgurtkonstruktion nach einem oder mehreren der vorigen Ansprüche, dadurch gekennzeichnet, daß an dem freien Ende des Arms (1) eine um die Längsachse (8) des Arms (1) drehbare Gabel (9) angebracht ist und daß darin eine um ihre Längsachse drehbare Führungsrolle (10) für den Gurt angebracht worden ist.

5. Dreipunktsicherheitsgurtkonstruktion nach einem oder mehreren der vorigen Ansprüche, dadurch gekennzeichnet, daß der Arm (1) wenigstens auf einem Teil seiner Längsachse (8', 8'') nach innen geknickt ist.

## Revendications

1. Construction de ceinture de sécurité à trois points d'attache pour un véhicule, dans laquelle: les deux extrémités de la ceinture sont fixées à un premier point au montant de la porte du véhicule ou à proximité de celui-ci, un enrouleur automatique pour la ceinture pouvant être monté pour une des deux extrémités de celle-ci; un bras pivotant (1) est monté en un deuxième point avec un moyen de guidage (9, 10) de la ceinture, deuxième point où se trouve également un premier coulant (4) pour la ceinture, et il y a un second coulant avec des moyens de fixation, qui peut coulisser sur la ceinture et être fixé à un troisième point situé, à l'opposé au montant de porte, au côté d'un siège placé à cet endroit; le bras (1) possède un point de fixation (5) pour y fixer l'extrémité d'un ressort à boudin (6) tandis que l'autre extrémité (7) de ce ressort (6) est assujettie à une partie de la carrosserie du véhicule, lequel point de fixation (5) ne coïncide pas avec le centre de pivotement (2) du bras (1) et est placé de telle façon que l'axe de rotation imaginaire du point de pivotement (2) du bras (1) coupe le plan passant par l'axe central (A) du ressort (6) en position verticale du bras (1) et par l'axe central (A') du ressort (6') en position horizontale du bras (1), et est situé de telle sorte que la composante tangentielle (C') de la force de tension du ressort (6') en position horizontale du bras (1) est dirigée en sens inverse de la composante tangentielle (C) en position verticale du bras (1), construction caractérisée en ce que le deuxième point est situé sur le montant de porte plus haut que le premier point, en ce que ce deuxième point est situé environ à la hauteur des épaules d'une personne assise là lors de l'utilisation, et que le bras pivotant (1) est fixé au montant et peut pivoter entre la position verticale et la position horizontale, et que les moyens de guidage (9, 10) de la ceinture qui peuvent tourner autour des axes longitudinaux du bras (1) et que le premier coulant (4) pour la ceinture est fixé dans le deuxième point tout en pouvant pivoter, et en ce que la composante tangentielle (C') en position horizontale du bras (1) est plus grande que le composante tangentielle (C) en position verticale du bras (1).

2. Construction de ceinture de sécurité à trois points d'attache selon la revendication 1, caractérisée en ce que les deux positions du bras (1) sont limitées par des butées.

3. Construction de ceinture de sécurité à trois points d'attache selon les revendications 1 ou 2, caractérisée en ce que le ressort à boudin (6) est fixé au bras (1) par l'intermédiaire d'une plaque, qui est pivotable autour du point de pivotement (2).

4. Construction de ceinture de sécurité à trois points d'attache selon une ou plusieurs des revendications qui précèdent, caractérisée en ce qu'une fourche (9) capable de pivoter autour de l'axe longitudinal (8) du bras (1) est montée à l'extrémité libre du bras (1) et en ce qu'un rouleau (10) de guidage de la ceinture, pouvant tourner autour de son axe longitudinal, est monté dans cette fourche.

5. Construction de ceinture de sécurité à trois points d'attache selon une ou plusieurs des revendications qui précèdent, caractérisée en ce que le bras (1) est coudé vers l'intérieur, tout au moins sur une partie de son axe longitudinal (8', 8'').

FIG. 1

FIG. 2